**Europäisches Patentamt**

**European Patent Office**

**Office européen des brevets**

(19)

(11) Veröffentlichungsnummer: **0 178 404**

**B1**

(12)

# EUROPÄISCHE PATENTSCHRIFT

(45) Veröffentlichungstag der Patentschrift:
15.11.89

(21) Anmeldenummer: **85109678.4**

(22) Anmeldetag: **01.08.85**

(51) Int. Cl.⁴: **F 16 L  58/02,** C 23 F  17/00,
F 16 L  9/18

(54)  **Metallisches Rohr, das mit einem Korrosionsschutz versehen ist, und Verfahren zu dessen Herstellung.**

(30)  Priorität: **17.10.84  DE 3438013**

(43)  Veröffentlichungstag der Anmeldung:
**23.04.86 Patentblatt 86/17**

(45)  Bekanntmachung des Hinweises auf die Patenterteilung:
**15.11.89 Patentblatt 89/46**

(84)  Benannte Vertragsstaaten:
**DE FR GB IT**

(56)  Entgegenhaltungen:
**AT-B-367 885**
**DE-B-2 651 838**
**DE-C-2 046 449**

(73)  Patentinhaber: **MANNESMANN Aktiengesellschaft,**
**Mannesmannufer 2, D-4000 Düsseldorf 1 (DE)**

(72)  Erfinder: **Hahn, Rüdiger, Dipl.- Ing., Amselweg 19,**
**D-6909 Walldorf (DE)**
Erfinder: **Wessel, Hans Peter, Rockenauer Pfad 27,**
**D-6909 Walldorf (DE)**

EP 0 178 404 B1

**Beschreibung**

Die Erfindung betrifft ein metallisches Rohr, das gegen chemische und/oder mechanische Angriffe mit einem Korrosionsschutz versehen ist, wobei der Korrosionsschutz aus mehreren Schichten besteht, von denen zumindest eine untere Schicht aus Metall bzw. einer Metallegierung eine Metall- bzw. Metallegierungsschicht bildet, und eine äußere Kunststoffschicht vorgesehen ist, sowie ein Verfahren zum Beschichten.

Derartige metallische, korrosionsgeschützte Rohre dienen dem Zweck, auch nach Verformung und während des Gebrauchs unter Schlag-, Stoß- und Biegebeanspruchung noch korrosionsbeständig zu bleiben. Solche Eigenschaften werden z. B. von Kraftfahrzeugteilen gefordert. Es ist bekannt (DE-C 2 046 449/US-A 3 808 057), einen auf galvanischem Weg verzinkten Körper mit einem Chromatüberzug und anschließend mit einer nicht wachsartigen Kunststoffbeschichtung zu versehen, die anschließend noch wärmebehandelt wird. Das bekannte Verfahren führt zu einer mehrlagigen Schutzschicht.

Es ist außerdem bekannt (DE-B 1 246 357), Schutzüberzüge auf Metallgegenstände unter Benutzung von ein Reduktionsmittel und Verbindungen des sechswertigen Chroms enthaltenden wässrigen Dispersionen aufzubringen, wobei eine Dispersion angewendet wird, bei der ein hydrophobes Harz nicht wachsartigen Charakters, das ggf. härtend oder thermoplastisch sein kann, zugesetzt wird.

Der Erfindung liegt demgegenüber die Aufgabe zugrunde, einen Metallgegenstand mit einem mehrschichtigen Korrosionsschutz zu schaffen, der bei gegenseitiger Haftfähigkeit der einzelnen Schichten für eine höhere Verformung ausreichend flexibel ist und eine noch größere Korriosionsbeständigkeit aufweist.

Die gestellte Aufgabe wird erfindungsgemäß dadurch gelöst, daß auf der Oberfläche, des Rohres eine Metallegierungsschicht, bestehend aus niedrigschmelzenden Metallen aufgetragen ist, daß auf der Metallegierungsschicht eine nach zwei Seiten haftfähige Zwischenschicht aufgebracht ist und daß auf der Zwischenschicht zumindest eine Schicht aus hochresistentem, thermoplastischem Kunststoff oder aus Duroplast gebildet ist. Ein solcher mehrschichtiger Korrosionsschutz hat sowohl zum Untergrund (Metalloberfläche) als auch untereinander zu den einzelnen Schichten hohe Adhäsionseigenschaften, und die Schichten sind für höhere Verformungen, wie z. B. Rohrbiegungen, äußerst flexibel. Ein weiterer Vorteil besteht in der hohen Resistenz bei Prüfungen auf Grundmetallkorrosion nach DIN 50018/2,0 S (verschärfte Industrieatmosphäre) bzw. ASTM-B117 (Salzsprühtest). Diese Korrosionsschutzschicht zeigt bei entsprechender elastischer Einstellung der Komponenten ein homogenes Verhalten.

Die erfindungsgemäßen Wirkungen und zusätzliche Wirkungen können vorteilhafterweise dadurch erzielt werden, daß auf der Metall- bzw. Metallegierungsschicht eine nach zwei Seiten haftfähige Zwischenschicht aufgebracht ist und daß auf der Zwischenschicht zumindest eine Schicht aus hochresistentem, thermoplastischen Kunststoff oder aus Duroplast gebildet ist.

Die erfindungsgemäßen Wirkungen und zusätzliche Wirkungen können vorteilhafterweise dadurch erzielt werden, daß auf der Metall- bzw. Metallegierungsschicht eine Chromatschicht aufgetragen ist und daß auf,dieser Chromatschicht die nach zwei Seiten haftfähige Zwischenschicht aufgebracht ist.

Die Erfindung kann aufgrund unterschiedlichem Schmelzbereich und Temperatur zur Filmbildung derart ausgeführt sein, daß bei einer Metallegierungsschicht aus niedrigschmelzenden Metallen die Zwischenschicht eine kurzzeitige Wärmeisolierung bzw. Wärme-Sperrschicht bildet und ein höher schmelzender hochresistenter, thermoplastischer, Kunststoff bzw. der Duroplast als Schicht aufgebracht sind.

Ein wesentlicher Vorteil ist, daß durch diese Zwischenschicht ein Aufbringen von hochschmelzenden Kunststoffen bzw. Duroplasten, die zur Reaktion höhere Temperaturen benötigen, auf niedrigschmelzende Metallegierungen möglich wird. Während des Aufbringens des Kunststoffes bilden sich keine Abschmelzungen der Metallegierung, so daß Ansammlungen von Metallegierung unter Bildung von Freizonen auf dem Metallgegenstand vermieden werden. Die Zwischenschicht wirkt hier vorübergehend als Sperrschicht und verhindert in diesem Zeitabschnitt das Zusammenlaufen der Metallegierung. Nach dem Aufbringen des Kunststoffes bewirkt die Zwischenschicht eine äußerst innige Verbindung zwischen Kunststoff und Metalllegierung. Diese Eigenschaften weisen z. B. Mischpolymerisate, d.h. Kunstharze von der Sorte auf, bei der die Adhäsion auch bei höheren Temperaturen vorliegt.

Als vorteilhafte Metallegierung ist nach einem weiteren Merkmal vorgesehen, daß die Metallegierungsschicht aus einer Blei-Zinn-Legierung besteht. Eine derartige Legierung ist weich und flexibel und im übrigen wirtschaftlich einsetzbar. Der Verwendung einer Blei-Zinn-Legierung kommen außerdem die verbreiteten Einrichtungen auf diesem Gebiet entgegen.

Die oben angegebene Legierung ist immer wirksam. Die besten Ergebnisse werden aber erzielt, wenn die Blei-Zinn-Legierung aus z. B. 60 Teilen Blei und aus 40 Teilen Zinn zusammengesetzt ist. Diese Zusammensetzung ist wirtschaftlich, erweist sich bei der Verarbeitung von Blei für das Personal auch als sicher und zulässig. Ferner liegt der Schmelzpunkt relativ niedrig, wodurch eine Energieersparnis bei der Verarbeitung zu verzeichnen ist.

Bei der Verarbeitung derartig niedrigschmelzender Metallegierungen reicht für die Bildung einer ersten Korrosionsbremse schon aus, daß die Metallegierungsschicht eine Schichtdicke von ca. 4 bis 10 µm aufweist. Eine solche Schichtdicke ist in der Praxis leicht und gleichmäßig sowie haltbar bei den nachfolgenden Verformungen des Metallgegenstandes aufzubringen.

Eine weitere Alternative wird erzielt, wenn die Metallschicht aus Zink besteht.

Ferner ist vorteilhaft, daß die Metallschicht aus einer galvanisch abgeschiedenen Zinkschicht besteht.

Gemäß einer anderen Weiterbildung der Erfindung ist vorteilhaft, daß die Zwischenschicht eine hohe Adhäsionskraft zu der darunter befindlichen Metall- bzw. Metallegierungsschicht oder Chromatschicht aufweist. Eine solche Zwischenschicht stellt die gewünschte Haftfestigkeit sicher und bildet gleichzeitig eine dichte, homogene Oberfläche, womit die gewünschte Sperrwirkung verbunden ist. Die Zwischenschicht ist außerdem in Verbindung mit dem Metall bzw. der Metallegierung elastisch genug, um die höheren Verformungen zu überstehen, ohne aufzureißen oder gar abzublättern.

Die Verbindung zwischen der Metallegierung und der Zwischenschicht wird wesentlich begünstigt, wenn die Temperatur zur Filmbildung der Zwischenschicht niedriger liegt als der darunter befindliche Schmelzpunkt der Metallegierungsschicht. Bei einem solchen Temperaturverhältnis wird ebenfalls ein Zusammenlaufen der Metallegierung vermieden.

Von Vorteil im Verhältnis Zwischenschicht /Kunststoffschicht ist es weiterhin, daß die Zwischenschicht eine hohe Elastizität und haftvermittelnde Eigenschaften gegenüber der Kunststoffschicht aufweist.

Eine Maßnahme, die Korrosionsbeständigkeit des metallischen Rohres vorteilhaft zu erhöhen, ist darin zu sehen, daß auf der Zwischenschicht weitere Schichten aus hochresistentem Kunststoff angeordnet sind.

Die Erzeugung des Schichtaufbaus wird nach der weiteren Erfindung dahingegehend durchgeführt, daß die Metall- bzw. Metallegierungsschicht aus der Schmelzphase mechanisch oder galvanisch im Durchlaufverfahren, die Zwischenschicht, aus einem Primer bestehend, im Flutverfahren oder durch Aufspritzen aus einer Lösungsmittelphase oder Dispersionsphase oder elektrostatisch aus der festen Phase und der Kunststoff im Flutverfahren, durch Aufspritzen aus einer Lösungsmittelphase, einer Dispersionsphase oder elektrostatisch aus der festen Phase elektrostatisch aufgetragen werden.

Den betrieblichen Voraussetzungen entspricht, daß die Metallegierungsschicht bei einer Temperatur von ca. 190 bis 235° C aufgetragen wird.

Dementsprechend ist ein wirtschaftlich arbeitendes Verfahren darauf abgestellt, daß der hochresistente Kunststoff bei einer Temperatur von ca. 240 bis 270° C eingebrannt, getrocknet bzw. aufgeschmolzen wird.

Das metallische Rohr, inbesondere aus Stahl empfiehlt sich besonders für die Anwendung als Bremsleitungen, Kraftstoff- und Hydraulikleitungen für Kraftfahrzeuge.

In der Zeichnung sind Ausführungsbeispiele der Erfindung schematisch dargestellt und werden im folgenden näher erläutert. Es zeigen:

Fig. 1    einen Querschnitt eines Rohres mit einfacher Kunststoffbeschichtung,

Fig. 2    einen Querschnitt eines Rohres mit doppelter Kunststoffbeschichtung,

Fig. 3    einen Querschnitt eines Rohres mit einer Chromatschicht und einfacher Kunststoffbeschichtung,

Fig. 4    einen Querschnitt eines Rohres mit einer Chromatschicht und doppelter Kunststoffbeschichtung.

Das Rohr 1 bildet im Ausführungsbeispiel ein nahtloses, geschweißtes oder doppelwandig gerolltes Rohr. Auf dieses Rohr 1 ist ein Korrosionsschutz gegen chemische und/oder mechanische Angriffe aufgetragen, der aus mehreren Schichten besteht. Auf die Rohr-Oberfläche 2 des Rohres 1 selbst wird im üblichen Verfahren zunächst eine Metallegierungsschicht 3 aufgebracht, deren Zusammensetzung z. B. zwei niedrigschmelzende Metalle vorsieht. Im Ausführungsbeispiel ist Blei und Zinn im Legierungsverhältnis 60 : 40 verwendet. Nach dem Erstarren dieser Metallegierungsschicht 3 wird eine Zwischenschicht 5, z. B. ein Primer aufgetragen. Die Zwischenschicht 5 besteht aus einem Bindemittelsystem, das ein Kunstharz darstellt und u.a. korrosionshemmende Füllstoffe enthält. Die Zwischenschicht 5 wirkt hier zunächst als Haftvermittler und ist daher zur Seite der Metallegierungsschicht 3 äußerst haftfähig. Nach der anderen Seite haftet die Zwischenschicht 5 gegenüber einer dann aufzutragenden hochresistenten, thermoplastischen Kunststoffschicht 6, an deren Stelle auch wie beschrieben Duroplaste treten können. Besonders geeignet sind Polyvinylfluorid (PVF) bzw. Polyvinyldifluorid (PVF2).

Die Schichtdicke der Metallegierungsschicht 3 beträgt ca. 4 bis 10 µm, so daß in einem schnellarbeitenden Verfahren produziert werden kann. Die Zwischenschicht 5, d.h. der sogenannte Primer, ist als Kunstharz so gewählt, daß eine hohe Adhäsionskraft zu der darunterbefindlichen Metallegierungsschicht 3 gegeben ist.

In einer besonderen Ausführungsform weist die Zwischenschicht 5 wie die Kunststoffschicht 6 eine hohe Elastizität, haftvermittelnde Eigenschaften sowie Temperaturstabilität auf.

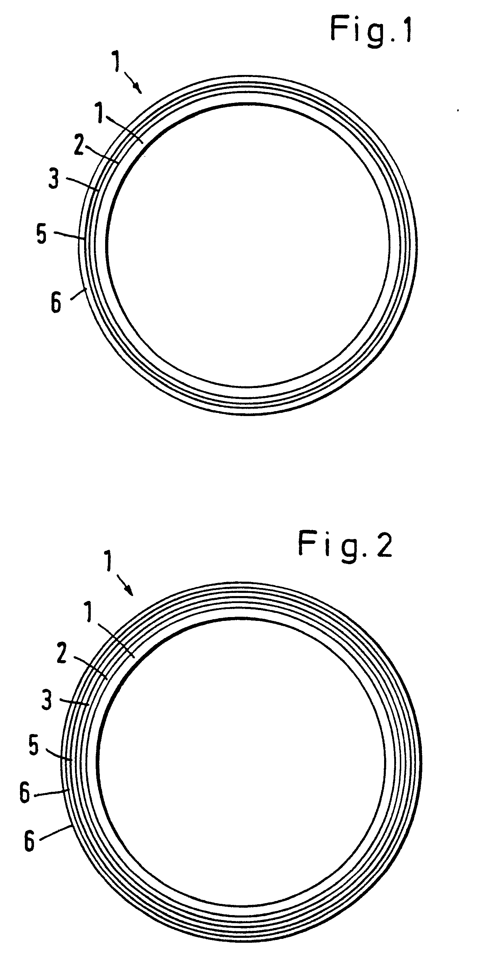

Gemäß Fig. 2 ist eine weitere Schicht 6 aus hochresistentem Kunststoff bzw. hochresistentem Duroplast vorgesehen. Das Aufbringen einer weiteren Schicht 6 bedarf keiner zusätzlichen Zwischenschicht.

Die Bewertung des erfindungsgemäß gegen Korrosion geschützten Rohres 1 wird deutlich, wenn folgende Versuche durchgeführt werden:

Ein nur bleiverzinntes Stahlrohr 1 würde dem Test nach ASTM-B117 (Salzsprühtest) nicht standhalten, d.h. ein solches Rohr würde nach ca. 360 Stunden Grundmetallkorrosion (Rotrost) zeigen. Die Prüfung gemäß DIN 50018/2,0 S (verschärfte Industrieatmosphäre) würde beim nur

bleiverzinnten Rohr ebenfalls nur schlechte Testergebnisse erbringen. Nach DIN 50018/2,0 S (entspricht 2 Liter S02) wird nur eine Runde bis zur sichtbaren Grundmetallkorrosion erreicht.

Ein verzinktes Stahlrohr, das mit einer Chromatschicht sowie mit einer Kunststoffschicht versehen ist, erreicht über 50 Runden nach DIN 50018/2,0 S oder über 5000 Stunden nach ASTM-B 117 bis zur Grundmetallkorrosion.

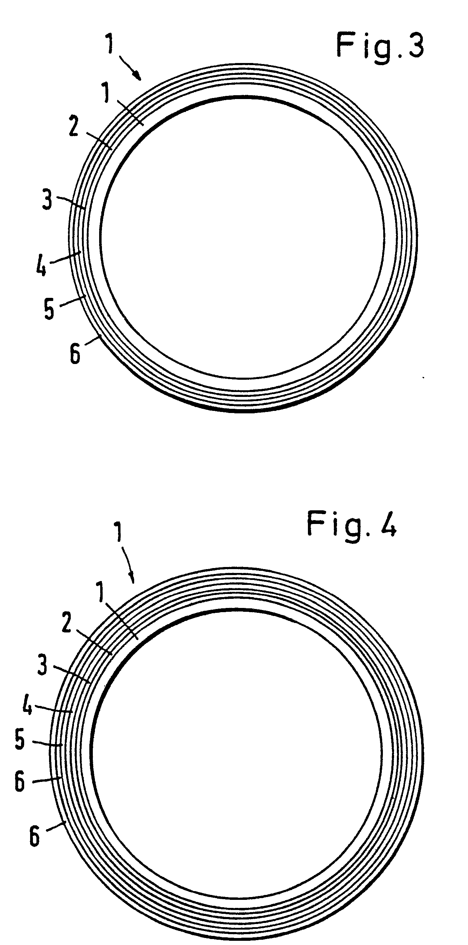

Gemäß der Erfindung erreicht man bei Stahlrohren mit dem Schichtaufbau Blei-Zinn, Zwischenschicht und Kunststoffschicht ebenfalls eine Resistenz von über 50 Runden nach DIN 50018/2,0 S oder 5000 Stunden nach ASTM-B 117. Gemäß der Erfindung erreicht man bei Stahlrohren mit einem Schichtaufbau Zink, Zwischenschicht und Kunststoffschicht eine Resistenz von über 60 Runden nach DIN 50018/2,0 S oder 7500 Stunden nach ASTM-B 117. Man kann auch (gemäß Fig. 3 oder 4) zwischen Metallschicht bzw. Metallegierung 3 und der Zwischenschicht 5 eine Chromatschicht 4 auftragen, die die Resistenz im Hinblick auf die Vermeidung der Unterwanderung, wie sie z. B. bei Verletzung (z. B. Steinschlag) entstehen kann, positiv beeinflußt.

**Patentansprüche**

1. Metallisches Rohr, das gegen chemische und/oder mechanische Angriffe mit einem Korrosionsschutz versehen ist, wobei der Korrosionsschutz aus mehreren Schichten besteht, von denen zumindest ein untere Schicht aus einem Metall bzw. einer Metallegierung eine Metallegierungsschicht (3) bildet und eine äußere Kunststoffschicht (6) vorgesehen ist,
dadurch gekennzeichnet,
daß auf der Oberfläche (2) des Rohres eine Metallegierungsschicht (3), bestehend aus niedrigschmelzenden Metallen, aufgetragen ist, daß auf der Metallegierungsschicht (3) eine nach zwei Seiten haftfähige Zwischenschicht (5) aufgebracht ist und daß auf der Zwischenschicht (5) zumindest eine Schicht (6) aus hochresistentem, thermoplastischem Kunststoff oder aus Duroplast gebildet ist.

2. Metallisches Rohr, das gegen chemische und/oder mechanische Angriffe mit einem Korrosionsschutz versehen ist, wobei der Korrosionsschutz aus mehreren Schichten besteht, von denen zumindest eine untere Schicht (3) aus einem Metall gebildet ist, und eine äußere Kunststoffschicht (6) vorgesehen ist,
dadurch gekennzeichnet,
der Metallschicht (3) eine nach zwei Seiten haftfähige Zwischenschicht (5) aufgebracht ist und daß auf der Zwischenschicht (5) zumindest eine Schicht (6) aus hochresistentem, thermoplastischem Kunststoff oder aus Duroplast gebildet ist.

3. Metallisches Rohr, nach Anspruch 1 oder 2,
dadurch gekennzeichnet,
daß auf der Metall- bzw. Metallegierungsschicht (3) eine Chromatschicht (4) aufgetragen ist und daß auf dieser Chromatschicht (4) die nach zwei Seiten haftfähige Zwischenschicht (5) aufgebracht ist.

4. Metallisches Rohr, nach Anspruch 1,
dadurch gekennzeichnet,
daß bei einer Metallegierungsschicht (3) aus niedrigschmelzenden Metallen die Zwischenschicht (5) eine kurzzeitige Wärmeisolierung bzw. Wärme-Sperrschicht bildet und ein höher schmelzender hochresistenter, thermoplastischer Kunststoff bzw. Duroplast als Schicht (6) aufgebracht sind.

5. Metallisches Rohr nach den Ansprüchen 1, 3 und 4,
dadurch gekennzeichnet,
daß die Metallegierungsschicht (3) aus einer Blei-Zinn-Legierung besteht.

6. Metallisches Rohr nach den Ansprüchen 1, 3, 4 und 5,
dadurch gekennzeichnet,
daß die Blei-Zinn-Legierung aus z. B. 60 Teilen Blei und aus 40 Teilen Zinn zusammengesetzt ist.

7. Metallisches Rohr nach den Ansprüchen 1, 3 bis 6,
dadurch gekennzeichnet,
daß die Metallegierungsschicht (3) eine Schichtdicke von ca. 4 bis 10 μm aufweist.

8. Metallisches Rohr nach Anspruch 2,
dadurch gekennzeichnet,
daß die Metallschicht (3) aus Zink besteht.

9. Metallisches Rohr nach den Ansprüchen 2 und 8,
dadurch gekennzeichnet,
daß die Metallschicht (3) aus einer galvanisch abgeschiedenen Zinkschicht besteht.

10. Metallisches Rohr nach den Ansprüchen 1 bis 6,
dadurch gekennzeichnet,
daß die Zwischenschicht (5) eine hohe Adhäsionskraft zu der darunter befindlichen Metall- bzw. Metallegierungsschicht (3) oder Chromatschicht (4) aufweist.

11. Metallisches Rohr nach den Ansprüchen 1 bis 10,
dadurch gekennzeichnet,
daß die Temperatur zur Filmbildung der Zwischenschicht (5) niedriger liegt als der Schmelzpunkt der darunter befindlichen Metallegierungsschicht (3).

12. Metallisches Rohr nach den Ansprüchen 1 bis 11,
dadurch gekennzeichnet,
daß die Zwischenschicht (5) eine hohe Elastizität und haftvermittelnde Eigenschaft aufweist.

13. Metallisches Rohr nach den Ansprüchen 1 bis 12,
dadurch gekennzeichnet,
daß auf der Zwischenschicht (5) weitere Schichten (6) aus hochresistentem Kunststoff angeordnet sind.

14. Verfahren zum Beschichten des metallischen Rohres gemäß den Ansprüchen 1 bis 13,
dadurch gekennzeichnet,
daß die Metall- bzw. Metallegierungsschicht (3) aus der Schmelzphase mechanisch oder galvanisch i Durchlaufverfahren die Zwischenschicht (5), aus einem Primer bestehend, im Flutverfahren oder durch Aufspritzen aus einer Lösungsmittelphase oder Dispersionsphase oder elektrostatisch aus der festen Phase und der Kunststoff (6) im Flutverfahren, durch Aufspritzen aus einer Lösungsmittelphase oder Dispersionsphase oder elektrostatisch aus der festen Phase aufgetragen werden.

15. Verfahren nach Anspruch 14,
dadurch gekennzeichnet,
daß die Metallegierungsschicht (3) bei einer Temperatur von ca. 190 bis 235°C aufgetragen wird.

16. Verfahren nach Anspruch 14,
dadurch gekennzeichnet,
daß der hochresistente Kunststoff (6) bei einer Temperatur von ca. 240 bis 270°C eingebrannt, getrocknet bzw. aufgeschmolzen wird.

17. Metallisches Rohr, insbesondere aus Stahl, nach den Ansprüchen 1 bis 13,
dadurch gekennzeichnet,
daß es als Bremsleitungen, Kraftstoff- und Hydraulikleitungen für Kraftfahrzeuge dient.

## Claims

1. Metallic tube which is provided with a corrosion protection against chemical and/or mechanical attacks, the corrosion protection consisting of a plurality of layers of which at least one under layer of a metal or a metal alloy forms a metal alloy layer (3), and an outer synthetic plastics material layer (6) is provided, characterised in that on the surface (2) of the tube a metal alloy layer (3) consisting of low-melting metals is applied, in that on the metal alloy layer (3) there is applied an intermediate layer (5) capable of adhesion on both sides and in that on the intermediate layer (5) there is formed at least one layer (6) of high-resistance, thermoplastic synthetic plastics material or of thermosetting synthetic plastics material.

2. Metallic tube which is provided with a corrosion protection against chemical and/or mechanical attacks, the corrosion protection consisting of a plurality of layers of which at least one under layer (3) is formed from a metal, and an outer synthetic plastics material layer (6) is provided, characterised in that an intermediate layer (5) capable of adhesion on both sides is applied on the metal layer (3) and in that on the intermediate layer (5) there is formed at least one layer (6) of high-resistance thermoplastic synthetic plastics material or thermosetting synthetic plastics material.

3. Metallic tube according to Claim 1 or 2, characterised in that a chromate layer (4) is applied on the metal or metal alloy layer (3) and in that the intermediate layer (5) capable of adhesion to both sides is applied on this chromate layer (4).

4. Metallic tube according to Claim 1, characterised in that in the case of a metal alloy layer (3) of lowmelting metals the intermediate layer (5) forms a brief thermal insulation or heat blocking layer and a higher melting high-resistance thermoplastic synthetic plastics material or thermosetting plastics material are applied as layer (6).

5. Metallic tube according to Claims 1, 3 and 4, characterised in that the metal alloy layer (3) consists of a lead-tin alloy.

6. Metallic tube according to Claims 1, 3, 4 and 5, characterised in that the lead-tin alloy is composed for example of 60 parts lead and 40 parts tin.

7. Metallic tube according to Claims 1, 3 to 6, characterised in that the metal alloy layer (3) has a layer thickness of approximately 4 to 10 $\mu$m.

8. Metallic tube according to Claim 2, characterised in that the metal layer (3) consists of zinc.

9. Metallic tube according to Claims 2 and 8, characterised in that the metal layer (3) consists of a galvanically deposited zinc layer.

10. Metallic tube according to Claims 1 to 6, characterised in that the intermediate layer (5) has a high adhesion power to the metal or metal alloy layer (3) or chromate layer (4) situated therebeneath.

11. Metallic tube according to Claims 1 to 10, characterised in that the temperature for film formation of the intermediate layer (5) lies lower than the melting point of the metal alloy layer (3) situated therebeneath.

12. Metallic tube according to claims 1 to 11, characterised in that the intermediate layer (5) possesses a high elasticity and adhesion-communicating property.

13. Metallic tube according to Claims 1 to 12, characterised in that further layers (6) of high-resistance synthetic plastics material are arranged on the intermediate layer (5).

14. Process for coating the metallic tube according to Claims 1 to 13, characterised in that the metal or metal alloy layer (3) is applied out of the molten phase mechanically or galvanically by the continuous-flow method, the intermediate layer (5), consisting of a primer, is applied by the flood method or by spray application out of a solvent phase or dispersion phase or electrostatically out of the solid phase, and the synthetic plastics material (6) is applied in the flood method, by spray application out of a solvent phase or dispersion phase or electrostatically out of the solid phase.

15. Process according to Claim 14, characterised in that the metal alloy layer (3) is applied at a temperature of about 190 to 235°C.

16. Process according to Claim 14, characterised in that the high-resistance synthetic plastics material (6) is fired, dried and/or fused at a temperature of app. 240 to 270°C.

17. Metallic tube, especially of steel, according to Claims 1 to 13, characterised in that it serves as brake conduits, fuel and hydraulic conduits for motor vehicles.

## Revendications

1. Tube métallique, pourvu, contre les attaques chimiques et/ou mécaniques, d'une protection anti-corrosion constituée de plusieurs couches dont au moins une couche inférieure est une couche de protection alliage métallique (3) formée de métal ou d'alliage métallique, et une couche extérieure en matière plastique (6) étant prévue, caractérisé en ce qu'on applique sur la surface (2) du tube une couche d'alliage métallique (3) se compose de métaux à bas point de fusion, en ce qu'une couche intermédiaire (5) adhésive sur les deux côtés est appliquée sur la couche d'alliage métallique (3), et en ce qu'au moins une couche (6) en matière thermoplastique ou thermodurcissable de haute résistance est formée sur la couche intermédiaire (5).

2. Tube métallique pourvu, contre les attaques chimiques et/ou mécaniques, d'une protection anti-corrosion constituée de plusieurs couches dont au moins une couche inférieure (3) est formée d'un métal et une couche extérieure en matière plastique (6) étant prévue, caractérisé en ce qu'une couche intermédiaire (5) adhésive sur les deux côtés est appliquée sur la couche métallique (3), et en ce qu'au moins une couche (6) en matière thermoplastique ou thermodurcissable de haute résistance est formée sur la couche intermédiaire (5).

3. Tube métallique selon la revendication 1 ou 2, caractérisé en ce qu'une couche de chromate (4) est appliquée sur la couche (3) en métal ou en alliage métallique et en ce que la couche intermédiaire (5) adhésive sur les deux côtés est appliquée sur cette couche de chromate (4).

4. Tube métallique selon la revendication 1, caractérisé en ce que, dans le cas d'une couche d'alliage métallique (3) en métaux à bas point de fusion, la couche intermédiaire (5) forme une isolation thermique ou une barrière thermique temporaire et que l'on applique comme couche (6) une matière thermoplastique hautement résistante fondant à température plus élevée ou une matière thermodurcissable.

5. Tube métallique selon les revendications 1, 3 et 4, caractérisé en ce que la couche d'alliage métallique (3) est constituée d'un alliage plomb-étain.

6. Tube métallique selon les revendications 1, 3, 4 et 5, caractérisé en ce que l'alliage plomb-zinc est composé par exemple de 60 parties de plomb et de 40 parties d'étain.

7. Tube métallique selon les revendications 1, 3 à 6, caractérisé en ce que la couche d'alliage métallique (3) présente une épaisseur d'environ 4 à 10 μm.

8. Tube métallique selon la revendication 2, caractérisé en ce que la couche métallique (3) est en zinc.

9. Tube métallique selon les revendications 2 et 8, caractérisé en ce que la couche métallique (3) se compose d'une couche de zinc déposée galvaniquement.

10. Tube métallique selon les revendications 1 à 6, caractérisé en ce que la couche intermédiaire (5) présente une force d'adhésion élevée par rapport à la couche (3) de métal ou d'alliage métallique, ou à la couche de chromate (4) se trouvant au-dessous.

11. Tube métallique selon les revendications 1 à 10, caractérisé en ce que la température de formation de film de la couche intermédiaire (5) est inférieure au point de fusion de la couche d'alliage métallique (3) se trouvant au-dessous.

12. Tube métallique selon les revendications 1 à 11, caractérisé en ce que la couche intermédiaire (5) présente une élasticité élevée et une caractéristique produisant l'adhérence.

13. Tube métallique selon les revendications 1 à 12, caractérisé en ce que plusieurs couches (6) en matière plastique à haute résistance sont disposées sur la couche intermédiaire (5).

14. Procédé de revêtement du tube métallique selon les revendications 1 à 13, caractérisé en ce que la couche (3) de métal ou d'alliage métallique est appliquée selon un procédé en continu, mécaniquement en partant de la phase de fusion ou galvaniquement, en ce que la couche intermédiaire (5) se composant d'un primer est appliquée par un procédé de coulée ou par pulvérisation d'une phase d'un agent diluant ou d'une phase de dispersion ou électrostatiquement en partant de la phase solide, et en ce que la matière plastique (6) est appliquée par pulvérisation d'une phase d'un agent diluant ou d'une phase de dispersion ou électrostatiquement en partant de la phase solide.

15. Procédé selon la revendication 14, caractérisé en ce que la couche (3) d'alliage métallique est appliquée à une température d'environ 190 à 235°C.

16. Procédé selon la revendication 14, caractérisé en ce que la matière plastique à haute résistance (6) est chauffée à une température d'environ 240 à 270°C, puis séchée et coulée.

17. Tube métallique selon les revendications 1 à 13, en particulier en acier, caractérisé en ce qu'il sert de conduite de liquide de freinage, de conduite de carburant et de conduite hydraulique pour des véhicules automobiles.

Fig.1

Fig.2

Fig. 3

Fig. 4